# EUROPÄISCHE PATENTSCHRIFT

(11) **EP 2 310 115 B1**
(45) Veröffentlichungstag und Bekanntmachung des Hinweises auf die Patenterteilung: **08.10.2014**
(21) Anmeldenummer: 09777635.5
(22) Anmeldetag: 04.08.2009
(51) Int. Cl.: B29C 70/76, B29L 31/14, B01D 63/06, B01D 63/08, B01D 65/00, B01D 71/02, C02F 3/12

(54) **FILTRIEREINHEIT ZUR AUFBEREITUNG VON WASSER UND ANDEREN FLÜSSIGEN MEDIEN UND VERFAHREN ZUR HERSTELLUNG EINER SOLCHEN FILTRIEREINHEIT**
FILTER UNIT FOR TREATING WATER AND OTHER LIQUID MEDIA AND PROCESS FOR PRODUCING THE SAME
UNITÉ FILTRANTE DESTINÉE AU TRAITEMENT DE L' EAU ET D' AUTRES MILIEUX LIQUIDES ET SON PROCÉDÉ DE PRÉPARATION

(30) Priorität: 04.08.2008 DE 102008036920
(43) Veröffentlichungstag der Anmeldung: 20.04.2011
(73) Patentinhaber: ITN Nanovation AG, 66117 Saarbrücken (DE)
(72) Erfinder: GABRIEL, Kay, Jeddah 21432 (SA); GRÄNITZ, Christof, 66265 Wahlschied (DE)
(74) Vertreter: Patentanwälte Ruff, Wilhelm, Beier, Dauster & Partner
(86) Internationale Anmeldenummer: PCT/EP2009/005631
(87) Internationale Veröffentlichungsnummer: WO 2010/015374

(56) Entgegenhaltungen:
- EP-A2- 0 738 534
- WO-A1-2004/071620
- WO-A1-2004/091755
- WO-A2-2007/128565
- DE-A1- 19 807 769

## Beschreibung

Die vorliegende Erfindung betrifft eine Filtriereinheit, insbesondere zur Aufbereitung von Wasser, umfassend mindestens zwei keramische Filtermembranen sowie eine Halterung für die mindestens zwei keramischen Filtermembranen, sowie ein Verfahren zur Herstellung einer solchen Filtriereinheit.

Konventionelle Kläranlagen enthalten in der Regel ein Absetzbecken, in dem in einem ersten Schritt Grobbestandteile aus dem Abwasser entfernt werden, ein Belebungsbecken und ein Nachklärbecken. Im Belebungsbecken werden Mikroorganismen eingesetzt, um die im Abwasser enthaltenen Fäkalien oder andere organische Stoffe zu zersetzen. Im Nachklärbecken werden diese Mikroorganismen im Anschluß an das Belebungsbecken üblicherweise durch Sedimentation wieder vom Abwasser getrennt und gegebenenfalls, zumindest teilweise, in das Belebungsbecken zurückgeführt. Allerdings ist dabei eine vollständige Abtrennung der Mikroorganismen, insbesondere durch einen Sedimentationsprozeß in der Regel nicht möglich, so dass die Gefahr besteht, dass die zum Teil gesundheitsschädlichen Mikroorganismen mit dem Abwasser in die Umwelt gelangen können. Dies ist in der Regel nicht akzeptabel. Aus diesem Grund wird das aus dem Belebungsbecken stammende, aufgereinigte Abwasser mit Filtriereinheiten weiterbehandelt, um vorhandene Mikroorganismen zuverlässig abzutrennen.

Neben Filtriereinheiten mit Filtermembranen aus Kunststoff, wie sie beispielsweise aus der EP-A1-602560, der WO-A-03/037489 oder der WO-A-04/091755 bekannt sind, haben sich in den letzten Jahren vermehrt auch Filtriereinheiten mit Filtern auf Keramikbasis durchgesetzt.

So beschreibt die DE-A-2603505 ein Flachmembranmodul für Trennvorgänge in der Flüssigphase. Die dort beschriebenen Filter sind jedoch für einen praktischen Einsatz bei den oben genannten Anwendungen nur bedingt geeignet. So haben sie z.B. keine im Inneren des Filters angeordneten Kanäle, durch die das Filtrat abgezogen werden könnte. Dies hat zur Folge, dass immer nur eine Seite des Filters mit der zu filtrierenden Flüssigkeit beaufschlagt werden kann und das Filtrat immer über die jeweils gegenüberliegende Seite des Filters abgezogen werden muss.

Die DE-C-4329473 zeigt ebenfalls druckstabile anorganische Filtermembranen, die in ihrer Herstellung allerdings sehr aufwendig sind. So müssen zwei plattenförmige Hälften mit halbkreisförmigen Ausbuchtungen, die dann später die innen verlaufenden Filtratkanäle bilden, zusammengesintert werden.

Demgegenüber zeigt die DE-A-19807769 eine Halterung für keramische Mikrofilter, in die ein keramischer Flachfilter (Membranplatte) eingesetzt werden kann. Zu diesem Zweck ist an der Halterung eine Aussparung vorgesehen, deren Umriss in der Draufsicht in etwa dem Querschnitt des darin einzusetzenden Mikrofilters entspricht. Die notwendige Flüssigkeitsdichtigkeit wird mit Hilfe von Gummidichtungen erreicht, die zwischen den Wandungen der Aussparung und dem Mikrofilter eingebracht sind. Auf diese Weise kann die zu filtrierende Flüssigkeit einen Großteil des in die Halterung eingesetzten Filters frei umströmen, und das Filtrat wird mit Hilfe eines leichten Unterdrucks über die im Inneren des Filters vorgesehenen Kanäle durch die Halterung hindurch abgeführt. Die gewählte Ausgestaltung der Halterung und der daraus gebildeten Filtereinheit kann jedoch u.U. nachteilig sein, da Gummidichtungen unter Umständen nicht die notwendige Flüssigkeitsdichtigkeit bereitstellen können. Dies kann insbesondere beim Rückspülen der Filtereinheit eine Rolle spielen. Dabei wird der Flüssigkeitsstrom durch den Filter zurückgeleitet, und zwar üblicherweise unter relativ hohem Druck, um die Filteroberfläche und das Filterinnere von dort vorhandenen Verunreinigungen (Retentat mit Mikroorganismen u.a.) zu befreien.

Ein davon abweichender Ansatz wird in der WO-A-07/128565 verfolgt. In diesem Dokument wird beschrieben, keramische Flachfilter durch Verklebung in ihren Halterungen festzulegen um so eine einfache und zuverlässige Abdichtung zu erhalten. Insbesondere in großen Filtriereinheiten, die eine Vielzahl von separaten Flachfiltern und entsprechenden Halterungen umfassen, war der mit der Verklebung verbundene Aufwand jedoch erheblich.

In der WO 2004/071620 A1 sind Filtrationsvorrichtungen beschrieben, bei denen mehrere parallel zueinander angeordnete Filtermembranen in als Kunststoffschuh ausgebildeten Halterungen festgelegt sind, die an ein Sammelrohr gekoppelt sind. Jede der Filtermembranen weist innenliegend mehrere Abführkanäle für gefiltertes Wasser auf. Diese münden jeweils in Kanäle innerhalb der Halterungen, die mit besagtem Sammelrohr verbunden sind. Die Zahl der Verbindungsstellen, die es abzudichten gilt, ist entsprechend recht hoch.

Aus der D4 (EP 0 738 534 A2) ist eine Vorgehensweise zum Einbetten unter anderem auch keramischer Filter in eine Halterung bekannt. Hierzu werden die Seiten der Filter mittels eines Vergussmaterials in einer Halterung fixiert, die mit einem partikulären Material befüllt ist. Das Vergussmaterial dringt in Zwischenräume zwischen den Partikeln ein und soll nach seiner Aushärtung eine flüssigkeitsdichte Einbindung der Filter in die Halterung bewirken.

Aus der D5 (WO 2004/091755 A1) ist ein Modul zur Filtration von flüssigen Medien bekannt, dessen wesentliche Bestandteile rechteckige, aus jeweils zwei Membranfolien gebildete Filtertaschen und ein Halter sind. Der Halter bildet die äußere Begrenzung des Filtrationsmoduls und kann durch Guss aus einem Kunstharz gebildet werden. Beim Guss können gegenüberliegende Ränder der Filtertaschen in den Halter eingebettet werden. Auf den Außenseiten des Halters können Saugkanäle angeordnet werden, die zur Entwässerung der Filtertaschen dienen. Hierzu weisen letztere eine Öffnung auf, die mit einem der Saugkanäle gekoppelt ist.

Der vorliegenden Erfindung lag die Aufgabe zugrunde, ein Filtersystem ohne die oben genannten Nachteile bereitzustellen. Insbesondere soll ein Filtersystem zur Verfügung gestellt werden, das einen möglichst einfachen Aufbau besitzt und in wenigen Schritten herzustellen ist. In fertigem Zustand soll es einen hohen Grad an Dichtigkeit aufweisen.

Diese Aufgabe wird gelöst durch die Filtriereinheit mit den Merkmalen des Anspruchs 1 sowie das Verfahren mit den Merkmalen des Anspruchs 11. Bevorzugte Ausführungsformen der erfindungsgemäßen Filtriereinheit sind in den abhängigen Ansprüchen 2 bis 10 dargestellt. Der Wortlaut sämtlicher Ansprüche wird hiermit durch Bezugnahme zum Inhalt dieser Beschreibung gemacht.

Die erfindungsgemäße Filtriereinheit umfasst mindestens zwei keramische Filtermembranen sowie eine Halterung für die mindestens zwei keramischen Filtermembranen. Dabei sind die keramischen Filtermembranen plattenförmig ausgebildet. Sie weisen jeweils eine filteraktive Außenseite sowie mindestens einen innenliegenden Abführkanal für gefiltertes Wasser auf. Die Halterung umfasst einen Sammelraum, über den aus den Abführkanälen tretendes Wasser abgeleitet werden kann. Darüber hinaus weist die Halterung mindestens zwei Aufnahmen zur flüssigkeitsdichten Festlegung bzw. Fixierung der mindestens zwei keramischen Filtermembranen auf, in denen diese derart festgelegt bzw. fixiert sind, dass die innenliegenden Abführkanäle der mindestens zwei keramischen Filtermembranen bzw. deren Austrittsöffnungen unmittelbar in den Sammelraum münden.

Besonders zeichnet sich die erfindungsgemäße Filtriereinheit dadurch aus, dass es sich bei der Halterung mit den Aufnahmen für die keramischen Filtermembranen um ein einstückig ausgebildetes Formteil handelt. Im Unterschied zum Stand der Technik weist also in einer erfindungsgemäßen Filtriereinheit nicht jede Filtermembran eine eigene Halterung auf, stattdessen sind vorzugsweise mehrere Filtermembranen in einer Halterung festgelegt. Entsprechend bedarf es bevorzugt auch keines separaten Filtratsammelkanals, wie es beispielsweise in der WO-A-07/128565 vorgesehen ist. Die erfindungsgemäße Filtriereinheit besteht aus weniger Komponenten als herkömmliche Filtriereinheiten und besitzt bereits deshalb überlegene Dichtigkeitseigenschaften.

Geeignete Filtermembranen für eine erfindungsgemäße Filtriereinheit sind aus dem Stand der Technik bekannt. Es sei in diesem Zusammenhang insbesondere auf die keramischen Flachmembranen verwiesen, die in der WO-A-07/128565, der WO-A-07/093440 und der WO-A-07/093441 beschrieben sind.

Bei einer erfindungsgemäßen Filtriereinheitsind die mindestens zwei keramischen Filtermembranen in den Aufnahmen der Halterung ohne Hilfs- und Verbindungsmittel, also insbesondere ohne Dicht- oder Klebemittel, festgelegt. Mit anderen Worten, die keramischen Filtermembranen sind in den Aufnahmen dichtungslos und klebstofffrei festgelegt. Vielmehr liegen die Filtermembranen so passgenau in den Aufnahmen, dass eine Abdichtung nicht erforderlich ist. Die Maße der Filtermembranen entsprechen im Wesentlichen exakt den Abmessungen der Aufnahmen, in denen sie festgelegt sind.

Dies wird dadurch erreicht, dass die Halterung "in unmittelbarem Kontakt" mit den mindestens zwei keramischen Filtermembranen hergestellt wird. In die resultierende Halterung sind die keramischen Filtermembranen dann eingegossen. Die Folge ist, dass die Anzahl der Einzelbauteile einer erfindungsgemäßen Filtriereinheit nochmals reduziert werden konnte, wodurch ihre Zuverlässigkeit nochmals gesteigert werden konnte.

Es handelt sich entsprechend bei der Halterung um ein Kunststoffteil, das durch Guss oder Spritzguss aus einer flüssigen Polymermasse oder aus einem flüssigen Prepolymer hergestellt ist. So kann das einstückige Formteil beispielsweise aus einem Epoxid- oder aus einem Polyurethanharz gefertigt sein.

In Übereinstimmung mit den obigen Ausführungensind die keramischen Filtermembranen in den Aufnahmen unlösbar festgelegt. Eine Trennung von Filtermembran und Halterung ist dann mit einer Zerstörung von zumindest einem der Teile verbunden.

Wie bereits erwähnt, weist eine erfindungsgemäße Filtriereinheit mindestens zwei Filtermembranen auf. Abhängig vom Einzelfall kann die Anzahl der Filtermembranen aber sehr stark variieren. So sind auch Filtrationsvorrichtungen mit einigen dutzend bis mehreren hundert Filtermembranen ohne weiteres denkbar.

Vorzugsweise sind die mindestens zwei Filtermembranen der erfindungsgemäßen Filtriereinheit im Wesentlichen parallel zueinander angeordnet. Dabei ist es weiter bevorzugt, dass der Abstand zwischen mehreren, im Wesentlichen parallel zueinander angeordneten Filtermembranen im Wesentlichen immer der gleiche ist.

Die Halterung ist bevorzugt derart ausgebildet, dass sie einen Rahmen mit vorzugsweise rechteckigem oder quadratischem Querschnitt sowie innerhalb des Rahmens mindestens einen Quersteg, vorzugsweise mehrere zueinander parallel angeordnete Querstege, aufweist.

Die Zwischenräume zwischen dem Rahmen und dem mindestens einen Quersteg und/oder zwischen benachbarten Querstegen bilden die Aufnahmen, in denen die keramischen Filtermembranen festgelegt sind. Der bzw. die Querstege sind dabei im übrigen bevorzugt parallel zu zwei sich gegenüberliegenden Seiten, insbesondere zu den Längs- oder den Querseiten eines Rahmens mit vorzugsweise rechteckigem oder quadratischem Querschnitt angeordnet, so dass sie dem Rahmen in einer Richtung eine hohe mechanische Stabilität verleihen können.

Dies spielt insbesondere dann eine Rolle, wenn mehrere erfindungsgemäße Filtriereinheiten zu einer mehrteiligen Filtriervorrichtung, die ebenfalls von der vorliegenden Erfindung umfasst ist, verschaltet werden. In bevorzugten Ausführungsformen weist der Rahmen der Halterung einer erfindungsgemäßen Filtriereinheiten nämlich mindestens zwei, vorzugsweise vier oder mehr, Öffnungen auf, über die filtriertes Wasser aus dem Sammelraum abgeführt werden kann. Diese Öffnungen befinden sich bevorzugt im Rahmen, insbesondere in den stabilisierten Seiten des Rahmens, also in den Seiten, an denen die Querstege anstossen. Besonders bevorzugt weist eine der stabilisierten Seiten eine oder zwei dieser Öffnungen auf, die gegenüberliegende zweite stabilisierte Seite ebenfalls eine oder zwei. Bevorzugt sind die Öffnungen im Rahmen derart angeordnet, dass mehrere erfindungsgemäße Filtriereinheiten aufeinander gestapelt werden können, wobei dann jeweils eine Öffnung im Rahmen einer aufgesetzten Filtriereinheit exakt auf einer korrespondierenden Öffnung im Rahmen der darunterliegenden Filtriereinheit zum Liegen kommen kann. Bei einer derartigen Aneinanderkopplung mehrerer Filtriereinheiten über die Öffnungen sind die Sammelräume in den Halterungen der einzelnen aufeinander gestapelten Filtriereinheiten korrespondierend miteinander verbunden, es entsteht ein durch die Halterungen aller gekoppelten Filtriereinheiten führender Kanal zum Abführen von filtriertem Medium bzw. Reinigungsmedium für eine Rückspülung. Der Kanal liegt vollkommen innerhalb der Halterungen, eine externe Verrrohrung der einzelnen Filtriereinheiten ist dadurch bedingt nicht erforderlich.

Bevorzugt eingesetzte Filtermembranen weisen innenliegende Abführkanäle mit Austrittsöffnungen auf, die an mindestens einer Schmalseite, bevorzugt an zwei sich gegenüberliegenden Schmalseiten, der keramischen Filtermembranen liegen. Die mindestens zwei keramischen Filtermembranen einer erfindungsgemäßen Filtriereinheit sind derart in den mindestens zwei Aufnahmen der Halterung einer erfindungsgemäßen Filtriereinheit festgelegt, dass die Abführkanäle bzw. deren Austrittsöffnungen unmittelbar in den Sammelraum münden (wie oben bereits erwähnt). Vorzugsweise ist oder sind dazu die Schmalseite oder die Schmalseiten, an denen sich die erwähnten Austrittsöffnungen der innenliegenden Abführkanäle befinden, vollständig, das heisst über ihre komplette Länge, in den Aufnahmen der Halterung oder ggf. der Halterungen festgelegt. Besonders bevorzugt bilden die erwähnten Querstege und der Rahmen einer erfindungsgemäß einsetzbaren Halterung Aufnahmen aus, deren Dimensionen exakt auf die Maße dieser Längsseiten abgestimmt sind.

Bevorzugt münden bei einer erfindungsgemäßen Filtriereinheit die Austrittsöffnungen in die Zwischenräume zwischen dem Rahmen und dem mindestens einen Quersteg einer Halterung einer erfindungsgemäßen Filtriereinheit und/oder zwischen deren benachbarten Querstegen. Diese Zwischenräume sind bevorzugt sämtlich miteinander verbunden, in ihrer Gesamtheit bilden sie eine Ausführungsform des oben erwähnten Sammelraums aus.

Den obigen Ausführungen ist bereits zu entnehmen, dass der Sammelraum einer einzelnen erfindungsgemäßen Filtriereinheit im Inneren der Halterung ausgebildet ist. Nach außen hin wird er dann bevorzugt begrenzt durch den erwähnten Rahmen der Halterung, die Schmalseiten der Filtermembranen mit den Austrittsöffnungen und ggf. die Querstege. Daneben weist die Halterung bevorzugt noch eine Deckplatte auf, die in den Rahmen eingesetzt werden kann und die den Sammelraum nach einer Seite, insbesondere nach vorne hin, abschließt. Diese Deckplatte kann transparent ausgebildet sein, beispielsweise aus Glas oder Plexiglas bestehen. Derart ausgestaltet lässt sich die Funktionsfähigkeit der erfindungsgemäßen Filtriereinheit optisch überwachen. Die Deckplatte kann beispielsweise mit dem Rahmen verklebt sein.

In bevorzugten Ausführungsformen weist eine erfindungsgemäße Filtriereinheit mehr als eine Halterung auf, in denen die keramischen Filtermembranen festgelegt sind. Besonders bevorzugt sind Ausführungsformen, in denen sich gegenüberliegende Schmalseiten von im Wesentlichen rechteckigen oder quadratischen Filtermembranen in jeweils einer Halterung festgelegt sind. Die Halterungen sind dabei vorzugsweise funktional identisch zueinander, weisen also jeweils die gleichen technischen Merkmale auf.

In bevorzugten Ausführungsformen weist die erfindungsgemäße Filtriereinheit zwei funktional identische Halterungen der oben beschriebenen Art auf, zwischen denen sich die mindestens zwei keramischen Filtermembranen befinden, diese jeweils mit innenliegenden Abführkanälen für gefiltertes Wasser und Austrittsöffnungen an sich gegenüberliegenden Schmalseiten der Filtermembranen, wobei die Filtermembranen mit diesen Schmalseiten in den jeweils mindestens zwei Aufnahmen der zwei Halterungen festgelegt sind. Im Betrieb wird das filtrierte Wasser somit an beiden Enden der keramischen Filtermembranen (an den zwei sich gegenüberliegenden Schmalseiten) über einen Sammelraum einer entsprechend angeordneten Halterung abgeführt.

Es sei noch am Rande erwähnt, dass die erfindungsgemäße Filtriereinheit neben Filtermembranen und Halterungen natürlich noch weitere Komponenten aufweisen kann, beispielsweise Seitenwände, die ggf. zusammen mit den Halterungen an den sich gegenüberliegenden Schmalseiten der keramischen Filtermembranen ein Gehäuse ausbilden können. Die Halterungen können somit auch als Teil des Gehäuses einer erfindungsgemäßen Filtriereinheit dienen.

Das erfindungsgemäße Verfahren zur Herstellung einer Filtriereinheit, wie sie vorstehend beschrieben wurde, zeichnet sich insbesondere dadurch aus, dass mindestens zwei keramische Filtermembranen innerhalb einer Form angeordnet werden und durch Guss oder Spritzguss aus einer flüssigen Polymermasse oder aus einem flüssigen Prepolymer eine Halterung aus Kunststoff gefertigt wird, in der die keramischen Filtermembranen festgelegt sind. Die flüssige Polymermasse oder das flüssige Prepolymer härten auf diesem Weg unmittelbar mit den Filtermembranen in Kontakt stehend aus und passt sich den Konturen der Filtermembranen exakt an. Dadurch ist es möglich, die Abmessungen der Aufnahmen exakt auf die Maße der Filtermembranen abzustimmen, so dass keinerlei Dichtmittel erforderlich sind.

Zur Herstellung einer erfindungsgemäßen Filtriereinheit, insbesondere einer bevorzugten Ausführungsform einer erfindungsgemäßen Filtriereinheit, wie sie nachstehend noch beschrieben ist, werden zwei oder mehr keramische Filtermembranen z.B. mittels eines oder mehrerer Positionierungsmittel (z.B. Rechen) in einer Form vorzugsweise parallel zueinander ausgerichtet, wobei bevorzugt ein definierter Abstand zwischen benachbarten Membranen eingehalten wird. Die verwendeten Filtermembranen weisen innenliegende Abführkanäle auf sowie auf mindestens einer Schmalseite, vorzugsweise auf zwei gegenüberliegenden Schmalseiten, Austrittsöffnungen, wie es bereits beschrieben wurde. Bevorzugt vor oder ggf. auch nach dem Anordnen der Filtermembranen in der Form werden die Austrittsöffnungen verschlossen, z.b mittels eines passenden Silikonkissens. Dadurch wird verhindert, dass der Zugang zu den Abführkanälen verstopft wird. Schließlich kann das Einbringen der flüssigen Polymermasse oder des flüssigen Prepolymers in die Form erfolgen. Diese kann um das Silikonkissen bzw. um ein alternatives gleichwertiges Verschlußmittel herum aushärten. Form und Volumen des Silikonkissens bzw. des gleichwertigen Verschlußmittels können dabei die Form und das Volumen des dabei entstehenden Sammelraums bestimmen. Zwischen den Filtermembranen bilden sich beim Aushärten der Polymermasse oder des flüssigen Prepolymers die erwähnten Querstege, um die Filtermembranen herum der oben beschriebene Rahmen. In diesen kann dann anschließend, nach Entnahme des Silikonkissens, noch die erwähnte Deckplatte eingeklebt werden. Die Prozedur kann dann, sofern erforderlich, am anderen Ende bzw. an der anderen Schmalseite der Membranen wiederholt werden.

Idealerweise wird der Ausdehnungskoeffizient des Polymers an den der Filtermembranen angepasst (bzw. ein passendes Polymer gewählt). Darüber hinaus sollte darauf geachtet werden, dass die Aushärtung nicht bei allzu hohen Temperaturen erfolgt.

Geeignet zur Verwendung in einem erfindungsgemäßen Verfahren sind grundsätzlich eine Vielzahl bekannter Polymerverbindungen, bevorzugt sind insbesondere Polymere auf Basis von Epoxid- oder Polyurethanharzen.

Die erfindungsgemäße Filtriereinheit ist hervorragend zur Verwendung in den eingangs genannten Anwendungsbereichen geeignet. Daneben bleibt insbesondere noch festzuhalten, dass sie nicht nur zur Wasseraufbereitung geeignet ist sondern generell zur fest-flüssig, flüssig-fest und flüssig-flüssig Filtration herangezogen werden kann.

Die genannten und weitere Vorteile der Erfindung ergeben sich aus den im folgenden im Zusammenhang mit den Figuren beschriebenen Ausführungsformen in Verbindung mit den Unteransprüchen. Dabei können die einzelnen Merkmale jeweils für sich allein oder in Kombination miteinander verwirklicht sein. Die im folgenden beschriebenen Ausführungsformen dienen lediglich zur Erläuterung und zum besseren Verständnis der Erfindung und sind in keiner Weise einschränkend zu verstehen.

In den Zeichnungen zeigen
- Fig. 1: eine Draufsicht von oben auf eine Ausführungsform einer erfindungsgemäßen Filtriereinheit aus mehreren keramischen Filtermembranen und zwei Halterungen,
- Fig. 2a: eine Frontansicht der in Fig. 1 dargestellten Filtriereinheit (schräg von vorne),
- Fig. 2b: eine weitere Frontansicht der in Fig. 1 dargestellten Filtriereinheit (frontal von vorne).

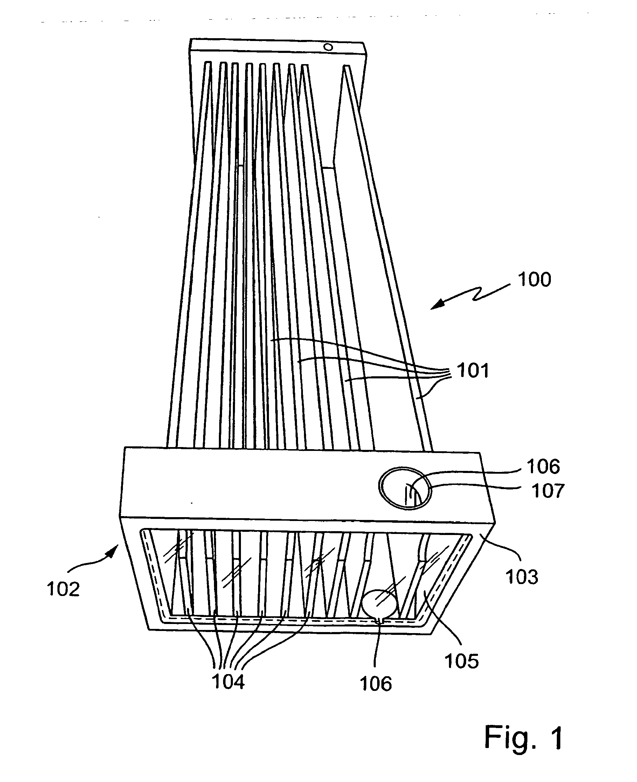

**Fig. 1** zeigt eine Ausführungsform einer erfindungsgemäßen Filtriereinheit **100** aus mehreren keramischen Filtermembranen **101** und zwei funktional identischen Halterungen **102,** zwischen denen die Filtermembranen **101** fixiert sind und in die die Filtermembranen eingegossen sind. Beide Halterungen weisen die gleichen technischen Merkmale auf, diese werden im Folgenden anhand der vorderen Halterung erläutert. Die Filtermembranen **101** sind parallel zueinander angeordnet und weisen (bis auf eine Ausnahme) einen im Wesentlichen gleichmäßigen Abstand zueinander auf. Die Halterungen **102** bestehen jeweils aus einem Kunststoffgussteil umfassend einen Rahmen **103** sowie mehrere Querstege **104** und einer als Plexiglasscheibe ausgebildeten Deckplatte **105.** Die Filtermembranen weisen innenliegende Abführkanäle für filtriertes Wasser auf, deren Austrittsöffnungen sich an zwei gegenüberliegenden Schmalseiten der Filtermembranen befinden. Zwischen dem Rahmen **103** und den beiden außenliegenden Querstegen **104** sowie zwischen jeweils unmittelbar benachbarten Querstegen **104** befinden sich Zwischenräume, die Aufnahmen bilden, in denen die keramischen Filtermembranen **101** dichtungslos und klebstofffrei festgelegt sind. Die Austrittsöffnungen der Filtermembranen **101** münden unmittelbar in diese Zwischenräume. Die Zwischenräume zwischen den Querstegen **104** sowie zwischen dem Rahmen **103** und den Querstegen **104** sind sämtlich kommunizierend miteinander verbunden, in ihrer Gesamtheit bilden sie einen Sammelraum für das filtrierte Wasser aus, der nach vorne hin durch die Plexiglasscheibe **105** abgeschlossen ist. Ansonsten ist der Sammelraum nach aussen hin begrenzt durch die Halterung **102** (bzw. durch deren Rahmen **103** sowie die Querstege **104)** und die Schmalseiten der Filtermembranen **101** mit den Austrittsöffnungen. Aus dem Sammelraum kann filtriertes Wasser über die zwei Öffnungen **106** abgeführt werden. Zugleich können die Öffnungen **106** aber auch dazu dienen, weitere Filtriereinheiten (bzw. deren Rahmen) anzukoppeln. Dazu kann in die Abstufung **107** ein Dichtring eingelegt werden. Eine zweite (zur hier dargestellten identische) Filtriereinheit kann dann auf der vorliegend dargestellten stapelartig angeordnet werden, so dass ihre untenliegenden Öffnung **106** auf der obenliegenden Öffnung **106** der dargestellten Filtriereinheit zum Liegen kommt.

Bei einer derartigen Aneinanderkopplung mehrerer Filtriereinheiten **100** über die Öffnungen **106** entsteht ein durch alle gekoppelten Filtriereinheiten **100** führender Kanal zum Abführen von filtriertem Medium bzw. Reinigungsmedium für eine Rückspülung. Eine exakte Positionierung mehrerer aneinandergekoppelter Filtriereinheiten **100** kann beispielsweise über Justierbolzen erreicht werden. Eine weitere Verschienung oder direkte Halterungen über Verschraubungen ist an den einzelnen Filtiereinheiten **100** damit nicht zwingend erforderlich. Die zu einer Einheit angekoppelten Filtriereinheiten **100** können z.B. über ein Stangensystem fest miteinander verspannt und damit zusammengehalten werden, so dass ein gemeinsames Anheben möglich ist.

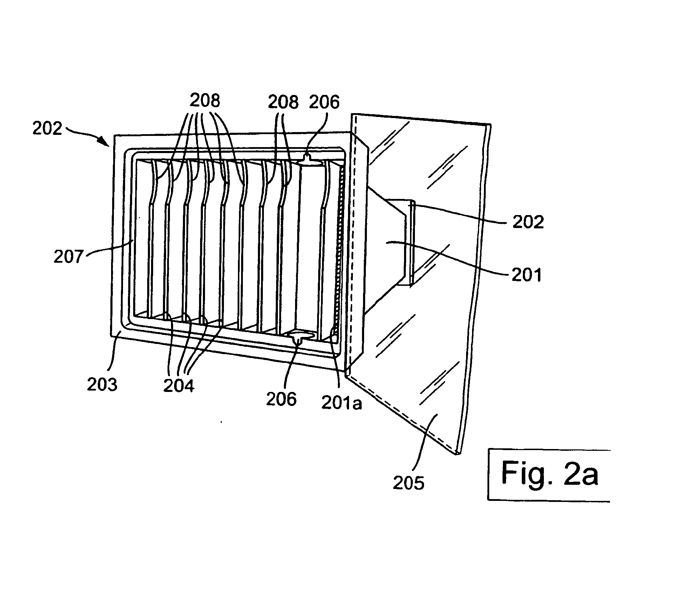

**Fig. 2a** zeigt eine Frontansicht der in **Fig. 1** dargestellten Filtriereinheit **100.** Auch hier erkennt man die keramischen Filtermembranen **201** sowie die Halterungen **202** mit dem Rahmen **203,** den Querstegen **204,** der Deckplatte bzw. Plexiglasscheibe **205** (hier nicht geschlossen) und den Öffnungen **206.** Die obenliegende und die untenliegende Seiten des Rahmens **203** sind durch die anstossenden Querstege **204** stabilisiert. Die Schmalseite **201a** einer der Filtermembranen tritt zwischen einem der Querstege **204** und der rechten Seite des Rahmens **203** klar hervor. Gut zu sehen sind die Austrittsöffnungen der sich innerhalb der Filtermembran **201** befindlichen Sammelkanäle.

Der Rahmen weist eine Abstufung **207** auf, in der die Plexiglasscheibe **205** versenkt werden kann. Die Fixierung der Scheibe in der Abstufung kann z.B. durch Verklebung erfolgen. Die Querstege **204** weisen an ihrem oberen Ende Ausbuchtungen **208** auf, durch die gewährleistet ist, dass filtriertes Wasser von jeder einzelnen Membran zur Öffnung **206** gelangen kann. Darüber hinaus kann über diese Ausbuchtungen eine Entgasung der Filtriereinheit erfolgen. Die freien Zwischenräume zwischen den Stegen **204** bzw. zwischen den Stegen **204** und dem Rahmen **203** sowie der Plexiglasscheibe bilden in ihrer Gesamtheit den bereits erwähnten Sammelraum für filtriertes Wasser.

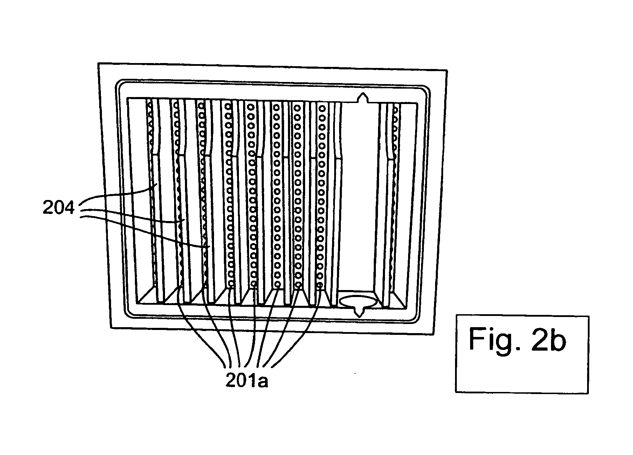

In **Fig. 2b** sind insbesondere die zwischen den Querstegen **204** liegenden Schmalseiten **201a** der Filtermembranen **101** der Filtriereinheit **100** gut zu erkennen.

## Patentansprüche

1. Filtriereinheit (100), insbesondere zur Aufbereitung von Wasser, umfassend mindestens zwei keramische Filtermembranen (101; 201) sowie eine Halterung (102; 202) für die mindestens zwei keramischen Filtermembranen, wobei
- die keramischen Filtermembranen (101; 201) plattenförmig ausgebildet sind und jeweils eine filteraktive Außenseite sowie mindestens einen innenliegenden Abführkanal für gefiltertes Wasser aufweisen,
- die Halterung (102; 202) einen Sammelraum aufweist, der im Inneren der Halterung ausgebildet ist und über den aus den Abführkanälen tretendes Wasser abgeleitet werden kann, und die Halterung (102; 202) mindestens zwei Aufnahmen zur flüssigkeitsdichten Festlegung der mindestens zwei keramischen Filtermembranen (101; 201) aufweist, in denen diese derart festgelegt sind, dass die innenliegenden Abführkanäle unmittelbar in den Sammelraum münden,
- es sich bei der Halterung (102; 202) mit den Aufnahmen für die keramischen Filtermembranen (101; 201) um ein einstückig ausgebildetes Formteil aus Kunststoff handelt,
**dadurch gekennzeichnet, dass** die Halterung (102; 202) aus einer flüssigen Polymermasse oder einem flüssigen Prepolymer in unmittelbarem Kontakt mit den mindestens zwei keramischen Filtermembranen hergestellt wurde und in dem die Filtermembranen dichtungslos und unlösbar festgelegt sind.

2. Filtriereinheit nach Anspruch 1, **dadurch gekennzeichnet, dass** das einstückige Formteil aus einem Epoxid- oder aus einem Polyurethanharz gefertigt ist.

3. Filtriereinheit nach einem der vorhergehenden Ansprüche, **dadurch gekennzeichnet, dass** die mindestens zwei keramischen Filtermembranen (101; 201) parallel zueinander angeordnet sind.

4. Filtriereinheit nach einem der vorhergehenden Ansprüche, **dadurch gekennzeichnet, dass** die Halterung (102; 202) einen Rahmen (103; 203) sowie innerhalb des Rahmens (103; 203) mindestens einen Quersteg (104; 204) aufweist, wobei Zwischenräume zwischen dem Rahmen (103; 203) und dem mindestens einen Quersteg (104; 204) und/oder zwischen benachbarten Querstegen (104; 204) die Aufnahmen bilden, in denen die keramischen Filtermembranen (101; 201) festgelegt sind.

5. Filtriereinheit nach einem der vorhergehenden Ansprüche, **dadurch gekennzeichnet, dass** die Austrittsöffnungen der innenliegenden Abführkanäle jeweils an mindestens einer Schmalseite (201 a) der keramischen Filtermembranen (101; 201) liegen.

6. Filtriereinheit nach Anspruch 4, **dadurch gekennzeichnet, dass** die Austrittsöffnungen der innenliegenden Abführkanäle jeweils an mindestens einer Schmalseite (201 a) der keramischen Filtermembranen (101; 201) liegen und zwischen dem Rahmen (103; 203) und dem mindestens einen Quersteg (104; 204) und/oder zwischen benachbarten Querstegen (104; 204) münden.

7. Filtriereinheit nach einem der vorhergehenden Ansprüche, **dadurch gekennzeichnet, dass** sie mehr als eine Halterung (102; 202) aufweist, in denen die keramischen Filtermembranen (101; 201) festgelegt sind.

8. Filtriereinheit nach einem der vorhergehenden Ansprüche, **dadurch gekennzeichnet, dass** sie mindestens zwei Öffnungen aufweist, über die filtriertes Wasser aus dem Sammelraum abgeführt werden kann, insbesondere im Rahmen der Halterung, besonders bevorzugt mindestens eine Öffnung in einer Seite des Rahmens und eine zweite Öffnung in der gegenüberliegenden Seite.

9. Filtriereinheit nach einem der vorhergehenden Ansprüche, **dadurch gekennzeichnet, dass** sie Teil einer Filtriervorrichtung ist, die mindestens zwei Filtriereinheiten nach einem der vorhergehenden Ansprüche umfasst.

10. Filtriereinheit nach Anspruch 9, **dadurch gekennzeichnet, dass** sie mindestens zwei Öffnungen aufweist, über die filtriertes Wasser aus dem Sammelraum abgeführt werden kann, insbesondere im Rahmen der Halterung, besonders bevorzugt mindestens eine Öffnung in einer Seite des Rahmens und eine zweite Öffnung in der gegenüberliegenden Seite, und die mindestens zwei Filtriereinheiten derart aneinander gekoppelt sind, dass die Sammelräume in ihren Halterungen über die mindestens zwei Öffnungen korrespondierend miteinander verbunden sind.

11. Verfahren zur Herstellung einer Filtriereinheit (100) umfassend mindestens zwei keramische Filtermembranen (101; 201) sowie eine Halterung (102; 202) für die mindestens zwei keramischen Filtermembranen, wobei
- die keramischen Filtermembranen (101; 201) plattenförmig ausgebildet sind und jeweils eine filteraktive Außenseite sowie mindestens einen innenliegenden Abführkanal für gefiltertes Wasser aufweisen,
- die Halterung (102; 202) einen Sammelraum aufweist, der im Inneren der Halterung ausgebildet ist und über den aus den Abführkanälen tretendes Wasser abgeleitet werden kann,
- die Halterung (102; 202) mindestens zwei Aufnahmen zur flüssigkeitsdichten Festlegung der mindestens zwei keramischen Filtermembranen (101; 201) aufweist, in denen diese derart festgelegt sind, dass die innenliegenden Abführkanäle unmittelbar in den Sammelraum münden und
- es sich bei der Halterung (102; 202) mit den Aufnahmen für die keramischen Filtermembranen (101; 201) um ein einstückiges ausgebildetes Formteil aus einem Kunststoff handelt,
**dadurch gekennzeichnet, dass** die mindestens zwei keramischen Filtermembranen (101; 201) innerhalb einer Form angeordnet werden und durch Guss oder Spritzguss aus einer flüssigen Polymermasse oder aus einem flüssigen Prepolymer in unmittelbarem Kontakt mit den mindestens zwei keramischen Filtermembranen die Halterung (102; 202) gefertigt wird, in der die keramischen Filtermembranen (101; 201) festgelegt sind.

## Claims

1. A filter unit (100), in particular for treating water, comprising at least two ceramic filter membranes (101; 201) and a mount (102; 202) for the at least two ceramic filter membranes, wherein
- the ceramic filter membranes (101; 201) are formed in the shape of plates and each have a filter-active outer side and at least one internally lying discharge channel for filtered water,
- the mount (102; 202) has a collection space disposed in the interior of the mount and via which water leaving the discharge channels can be drained, and
- the mount (102; 202) has at least two sockets for liquid-tight fixing of the at least two ceramic filter membranes (101; 201), in which sockets the membranes are fixed such that the internally lying discharge channels open out immediately into the collection space,
- the mount (102; 202) having the sockets for the ceramic filter membranes (101; 201) is a moulded part formed in one piece and made of synthetic material,
**characterised in that**
the mount (102; 202) is produced from a liquid polymer compound or from a liquid prepolymer in immediate contact to the at least two ceramic filter membranes and wherein the filter membranes are fixed without a seal and irremovably.

2. The filter unit according to claim 1, **characterised in that** the one-piece moulded part is manufactured from an epoxy resin or from a polyurethane resin.

3. The filter unit according to any one of the preceding claims, **characterised in that** the at least two ceramic filter membranes (101; 201) are arranged mutually parallel.

4. The filter unit according to any one of the preceding claims, **characterised in that** the mount (102; 202) has a frame (103; 203) and at least one crossmember (104; 204) inside the frame (103; 203), intermediate spaces between the frame (103; 203) and the at least one crossmember (104; 204) and/or between neighbouring crossmembers (104; 204) forming the sockets in which the ceramic filter membranes (101; 201) are fixed.

5. The filter unit according to any one of the preceding claims, **characterised in that** the outlet openings of the internally lying discharge channels each lie on at least one narrow side (201 a) of the ceramic filter membranes (101; 201).

6. The filter unit according to claim 4, **characterised in that** the outlet openings of the internally lying discharge channels each lie on at least one narrow side (201 a) of the ceramic filter membranes (101; 201) and open between the frame (103; 203) and the at least one crossmember (104; 204) and/or between neighbouring crossmembers (104; 204).

7. The filter unit according to any one of the preceding claims, **characterised in that** it has more than one mount (102; 202) in which the ceramic filter membranes (101; 201) are fixed.

8. The filter unit according to any one of the preceding claims, **characterised in that** it has at least two openings via which filtered water can be discharged from the collection space, in particular in the frame of the mount, particularly preferred at least one opening in one side of the frame and a second opening in the opposite side.

9. The filter unit according to any one of the preceding claims, **characterised in that** it is part of a filtration device which comprises at least two filter units according to any one of the preceding claims.

10. The filter unit according to claim 9, **characterised in that** it has at least two openings via which filtered water can be discharged from the collection space, in particular in the frame of the mount, particularly preferred at least one opening in one side of the frame and a second opening in the opposite side, and the at least two filter units are coupled to one another such that the collection spaces in their mounts are correspondingly connected to one another via the at least two openings.

11. A method for producing a filter unit (100) comprising at least two ceramic filter membranes (101; 201) and a mount (102; 202) for the at least two ceramic filter membranes, wherein
- the ceramic filter membranes (101; 201) are formed in the shape of plates and each have a filter-active outer side and at least one internally lying discharge channel for filtered water,
- the mount (102; 202) has a collection space disposed in the interior of the mount and via which water leaving the discharge channels can be drained,
- the mount (102; 202) has at least two sockets for liquid-tight fixing of the at least two ceramic filter membranes (101; 201), in which sockets the membranes are fixed such that the internally lying discharge channels open out immediately into the collection space, and
- the mount (102; 202) having the sockets for the ceramic filter membranes (101; 201) is a moulded part formed in one piece and made of synthetic material,
**characterised in that**
the at least two ceramic filter membranes (101; 201) are arranged in the interior of a mould and the mount (102; 202) is produced by moulding or injection moulding from a liquid polymer compound or from a liquid prepolymer in immediate contact to the at least two ceramic filter membranes, in which mount the ceramic filter membranes (101; 201) are fixed.

## Revendications

1. Unité filtrante (100), en particulier destinée au traitement de l'eau, comprenant au moins deux membranes céramiques filtrantes (101 ; 201) ainsi qu'un support (102 ; 202) pour les au moins deux membranes céramiques filtrantes,
- les membranes céramiques filtrantes (101 ; 201) étant réalisées en forme de plaque et présentant à chaque fois un côté extérieur à filtrage actif et au moins un canal d'évacuation intérieur pour l'eau filtrée,
- le support (102 ; 202) présentant un espace de collecte qui est réalisé à l'intérieur du support et par le biais duquel l'eau sortant hors des canaux d'évacuation peut être déviée, et
- le support (102 ; 202) présentant au moins deux logements pour la fixation étanche aux liquides des au moins deux membranes céramiques filtrantes (101 ; 201), dans lesquels celles-ci sont fixées de telle sorte que les canaux d'évacuation intérieurs débouchent directement dans l'espace de collecte,
- le support (102 ; 202) avec les logements pour les membranes céramiques filtrantes (101 ; 201) étant une pièce façonnée d'une seule pièce en plastique,
**caractérisée en ce que** le support (102 ; 202) a été fabriqué à partir d'une masse polymère fluide ou d'un prépolymère fluide en contact direct avec les au moins deux membranes céramiques filtrantes et les membranes céramiques filtrantes sont fixées sans joint et de manière inamovible dans celui-ci.

2. Unité filtrante selon la revendication 1, **caractérisée en ce que** la pièce façonnée d'une seule pièce est fabriquée en une résine époxyde ou en une résine de polyuréthane.

3. Unité filtrante selon l'une quelconque des revendications précédentes, **caractérisée en ce que** les au moins deux membranes céramiques filtrantes (101 ; 201) sont disposées parallèlement l'une à l'autre.

4. Unité filtrante selon l'une quelconque des revendications précédentes, **caractérisée en ce que** le support (102 ; 202) présente un cadre (103 ; 203) ainsi qu'au moins une nervure transversale (104 ; 204) à l'intérieur du cadre (103 ; 203), des espaces intermédiaires entre le cadre (103 ; 203) et l'au moins une nervure transversale (104 ; 204) et/ou entre des nervures transversales adjacentes (104 ; 204) formant les logements dans lesquels sont fixées les membranes céramiques filtrantes (101 ; 201).

5. Unité filtrante selon l'une quelconque des revendications précédentes, **caractérisée en ce que** les ouvertures de sortie des canaux d'évacuation intérieurs sont à chaque fois situées au niveau d'au moins un côté étroit (201 a) des membranes céramiques filtrantes (101 ; 201).

6. Unité filtrante selon la revendication 4, **caractérisée en ce que** les ouvertures de sortie des canaux d'évacuation intérieurs se situent à chaque fois au niveau d'au moins un côté étroit (201a) des membranes céramiques filtrantes (101 ; 201) et débouchent entre le cadre (103 ; 203) et l'au moins une nervure transversale (104 ; 204) et/ou entre des nervures transversales adjacentes (104 ; 204).

7. Unité filtrante selon l'une quelconque des revendications précédentes, **caractérisée en ce qu'**elle présente plus d'un support (102 ; 202), dans lesquels sont fixées les membranes céramiques filtrantes (101 ; 201).

8. Unité filtrante selon l'une quelconque des revendications précédentes, **caractérisée en ce qu'**elle présente au moins deux ouvertures par le biais desquelles de l'eau filtrée peut être évacuée hors de l'espace de collecte, en particulier dans le cadre du support, particulièrement préférablement au moins une ouverture dans un côté du cadre et une deuxième ouverture dans le côté opposé.

9. Unité filtrante selon l'une quelconque des revendications précédentes, **caractérisée en ce qu'**elle fait partie d'un dispositif de filtration qui comprend au moins deux unités filtrantes selon l'une quelconque des revendications précédentes.

10. Unité filtrante selon la revendication 9, **caractérisée en ce qu'**elle présente au moins deux ouvertures par le biais desquelles de l'eau filtrée peut être évacuée hors de l'espace de collecte, en particulier dans le cadre du support, particulièrement préférablement au moins une ouverture dans un côté du cadre et une deuxième ouverture dans le côté opposé, et les au moins deux unités filtrantes sont accouplées les unes aux autres de telle sorte que les espaces de collecte dans leurs supports soient connectés de manière correspondante les uns aux autres par le biais des au moins deux ouvertures.

11. Procédé de fabrication d'une unité filtrante (100) comprenant au moins deux membranes céramiques filtrantes (101 ; 201) ainsi qu'un support (102 ; 202) pour les au moins deux membranes céramiques filtrantes,
- les membranes céramiques filtrantes (101 ; 201) étant réalisées en forme de plaque et présentant à chaque fois un côté extérieur à filtrage actif et au moins un canal d'évacuation intérieur pour l'eau filtrée,
- le support (102 ; 202) présentant un espace de collecte qui est réalisé à l'intérieur du support et par le biais duquel l'eau sortant hors des canaux d'évacuation peut être déviée,
- le support (102 ; 202) présentant au moins deux logements pour la fixation étanche aux liquides des au moins deux membranes céramiques filtrantes (101 ; 201), dans lesquels celles-ci sont fixées de telle sorte que les canaux d'évacuation intérieurs débouchent directement dans l'espace de collecte, et
- le support (102 ; 202) avec les logements pour les membranes céramiques filtrantes (101 ; 201) étant une pièce façonnée d'une seule pièce en plastique,
**caractérisé en ce que** les au moins deux membranes céramiques filtrantes (101 ; 201) sont disposées à l'intérieur d'un moule et le support (102 ; 202) est fabriqué par moulage ou moulage par injection à partir d'une masse polymère fluide ou d'un prépolymère fluide en contact direct avec les au moins deux membranes céramiques filtrantes, dans lequel support les membranes céramiques filtrantes (101 ; 201) sont fixées.
